# EUROPEAN PATENT APPLICATION

(11) **EP 4 734 564 A1**
(43) Date of publication of application: **29.04.2026**
(21) Application number: 24208712.0
(22) Date of filing: 24.10.2024
(51) Int. Cl.: H04W 4/40, H04W 84/18, H04W 88/04, H04W 8/00

(54) **A COMMUNICATION SYSTEM FOR A VEHICLE, A METHOD FOR DATA COMMUNICATION WHEN A VEHICLE HAS NO DIRECT NETWORK CONNECTION AND A VEHICLE**

(71) Applicant: Zhejiang Zeekr Intelligent Technology Co., Ltd, Ningbo, Zhejiang 315899 (CN); Zhejiang Geely Holding Group Co., Ltd., Hangzhou, Zhejiang 310051 (CN)
(72) Inventor: WAERN, Jonathan, 44339 LERUM (SE); JOHANNESSON, Tobias, 41706 GÖTEBORG (SE)
(74) Representative: Zacco Sweden AB

(57) **Abstract**

The disclosure relates to a communication system (1) for a vehicle (2) comprising a communication unit (3); a memory (4); and a processing circuitry (7) operatively connected to the communication unit (3) and the memory (4), arranged to cause the communication system to: receive a request that the vehicle (2) needs to send a data package (5); detect that no direct network connection is available for sending the data package; search for surrounding devices (6,6') capable of data communication with the vehicle (2); detect at least one surrounding device (6,6') capable of data communication with the vehicle (2) and wherein the data communication is capable of receiving the data package (5); send a pairing request to the at least one surrounding device (6,6'); sending the data package (5) to the at least one surrounding device (6,6') with instructions to relay the information to network server when a network connection is available. The disclosure further relates to a method for data communication when a vehicle has no direct network connection and a vehicle.

## Description

### Technical field

The present disclosure relates to a communication system for a vehicle, a method for data communication when a vehicle has no direct network connection and a vehicle. More specifically, the disclosure relates to a communication system for a vehicle, a method for data communication when a vehicle has no direct network connection and a vehicle as defined in the introductory parts of the independent claims.

### Background art

Modern vehicles are to a continuously increased degree connected to the manufacturer's network and/or to the internet for communicating all sort of thing relating to the vehicle. As vehicles are used for transportation the network connection needs to be wireless via telecom networks or via satellite communication. However, there are many places that do not have any network coverage. A common example is parking garages that often have thick concrete walls and/or are placed underground. The need for vehicle for communicating with the network, however, remains the same regardless of the position of the vehicle. A problem thus occurs when a vehicle tries to communicate on the network when no network coverage is present. There is thus a need in the industry for improved communication solutions for vehicles.

### Summary

It is an object of the present disclosure to mitigate, alleviate or eliminate one or more of the above-identified deficiencies and disadvantages in the prior art and solve at least the above mentioned problem. According to a first aspect there is provided a communication system for a vehicle comprising a communication unit; a memory; and a processing circuitry. The processing circuitry is operatively connected to the communication unit and the memory, and is arranged to cause the communication system to: receive a request that the vehicle needs to send a data package; detect that no direct network connection is available for sending the data package; search for surrounding devices capable of data communication with the vehicle; detect at least one surrounding device capable of data communication with the vehicle and wherein the data communication is capable of receiving the data package; send a pairing request to the at least one surrounding device; sending the data package to the at least one surrounding device with instructions to relay the information to network server when a network connection is available.

The vehicle can then send communication packages without network coverage by relaying the data package via surrounding devices that will send the data package as soon as they again reach network coverage. In busy places like parking garages multiple vehicles and electronic devices often arrive and leave regularly so that a relayed data package has good chances to be sent by a surrounding device that receives the package and sends it of when it reaches network coverage.

According to some embodiments, the processing circuitry is further arranged to cause the communication system to: detect that the at least one surrounding device is in wake-up mode. The vehicle can then relay the data package to a surrounding device as soon as a surrounding device wakes up. By only sending the data package when detecting that a surrounding device is in wake-up mode, data communication can also be kept to a minimum, saving energy and battery.

According to some embodiments the detection that the at least one surrounding device is in wake-up mode comprises determining that the at least one surrounding device is in wake-up mode by: detecting movement of the at least one surrounding device; or detecting that the at least one surrounding device communicates a wake-up status.

If determining a movement of a device, where the device is a vehicle or another mobile device, it is likely that the device will move and thereby have greater chances of establishing an externa network or internet connection. If the surrounding device replies with a wake-up status, it is also an increased likelihood that the vehicle or device will move and recover an external network connection e.g. to the internet.

According to some embodiments, the processing circuitry is further arranged to cause the communication system to establish a data connection with the at least one surrounding device so that the system receives information how to transfer the data package.

According to some embodiments, the processing circuitry is further arranged to cause the communication system to: receive information that the at least one surrounding device has a direct network connection but has no connection to it at the moment. Information is thereby collected regarding to which devices are possible to use for relaying data packages.

According to some embodiments, the at least one surrounding device is a vehicle. And according to some embodiments, the at least one surrounding device is a mobile phone. However, the surrounding device can be any device with a wireless wide area network data connection. It may also be advantageous and in many cases required that the surrounding device is also able to communication with other devices via a further network standard made for local area network communication like Wifi or Bluetooth.

According to some embodiments, the at least one surrounding device is trusted. A trusted device could be a device having a pre-configured software installed for performing the relay of the communication package according to the present disclosure. According to some embodiments, a trusted device is a device or vehicle of the same brand as the vehicle or a device running a trusted software application.

According to some embodiments, the communication network is a wide area network connection with access to the network server. The wide area network may e.g. be provided via a telecom network, like 3G, 4G, 5G, but it could also be provided via Wifi.

According to some embodiments, the data package is encrypted. An advantage is that the data package then can contain data that is confidential even though the data package is shared with a potentially unknown surrounding device. The confidential data could be personal data or vehicle data that is considered sensitive information.

According to some embodiments, the surrounding devices of a first type are allowed to handle a first type of data packages; and surrounding devices of a second type are allowed a second type of data.

According to a second aspect there is provided a method for data communication when a vehicle has no direct network connection, the method comprising: receiving a request that the vehicle needs to send a data package ; detecting that no direct network connection is available for sending the data package; searching for surrounding devices capable of data communication with the vehicle; detecting at least one surrounding device capable of data communication with the vehicle and wherein the data communication is capable of receiving the data package; sending a pairing request to the at least one surrounding device; sending the data package to the at least one surrounding device with instructions to relay the information to network server when a network connection is available.

The vehicle can then send communication packages without network coverage by relaying the data package via surrounding devices that will send the data package as soon as they again reach network coverage. In busy places like parking garages multiple vehicles and electronic devices often arrive and leave regularly so that a relayed data package has good chances to be sent by a surrounding device that receives the package and sends it of when it reaches network coverage.

According to some embodiments, the method comprises detecting that the at least one surrounding device is in wake-up mode. The vehicle can then relay the data package also when surrounding devices are asleep by monitoring and waiting until a surrounding device wakes up. By only sending the data package when detecting that a surrounding device is in wake-up mode, data communication can also be kept to a minimum, saving energy and battery.

According to some embodiments the detecting that the at least one surrounding device is in wake-up mode further comprises determining that the at least one surrounding device is in wake-up mode by: detecting movement of the at least one surrounding device; or detecting that the at least one surrounding device communicates a wake-up status.

If determining a movement of a device, where the device is a vehicle or another mobile device, it is likely that the device will move and thereby have greater chances of establishing an externa network or internet connection. If the surrounding device replies with a wake-up status, it is also an increased likelihood that the vehicle or device will move and recover an external network connection e.g. to the internet.

According to some embodiments, the method comprises establishing a data connection with the at least one surrounding device so that the method receives information how to transfer the data package.

According to some embodiments, the method comprises receiving information that the at least one surrounding device has a direct network connection but has no connection to it at the moment. Information is thereby collected regarding to which devices are possible to use for relaying data packages.

According to some embodiments, the at least one surrounding device is a vehicle. According to some embodiments, the at least one surrounding device is a mobile phone. An advantage is that vehicles and mobile phones often has communication equipment that can handle the data package and are mobile so that the wireless data connection with high probability sooner or later will regain signal for their network connection.

According to some embodiments, the at least one surrounding device is trusted. A trusted device could be a device having a pre-configured software installed for performing the relay of the communication package according to the present disclosure. According to some embodiments, a trusted device is a device or vehicle of the same brand as the vehicle or a device running a trusted software application.

According to some embodiments, the communication network is a wide area network connection with access to the network server. The wide area network may e.g. be provided via a telecom network, like 3G, 4G, 5G, but it could also be provided via Wifi.

According to some embodiments, the data package is encrypted. An advantage is that the data package then can contain data that is confidential even though the data package is shared with a potentially unknown surrounding device. The confidential data could be personal data or vehicle data that is considered sensitive information.

According to some embodiments, the surrounding devices of a first type are allowed to handle a first type of data packages; and surrounding devices of a second type are allowed a second type of data. An advantage is that it can be differentiated which data packages are sent via which type of surrounding device. A vehicle of the same brand as the one sending the data package can e.g. be allowed to handle bigger data packages or data packages that are very sensitive.

According to a third aspect there is provided a vehicle comprising a communication unit; a memory; and a processing circuitry operatively connected to the communication unit and the memory, wherein the processing circuitry is arranged to execute the method according to the second aspect.

Effects and features of the second and third aspects are to a large extent analogous to those described above in connection with the first aspect. Embodiments mentioned in relation to the first aspect are largely compatible with the the second and third aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "sa id" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows a top principle view of a vehicle with a communication system for a vehicle according to the present disclosure.
Figure 2a shows a parking garage with no network connection and two parked vehicles.
Figure 2b shows the parking garage of Figure 2a where one of the vehicles has left the garage reached just outside the parking garage where network connection is available.
Figure 3 discloses a flow chart representing the method according to the present disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

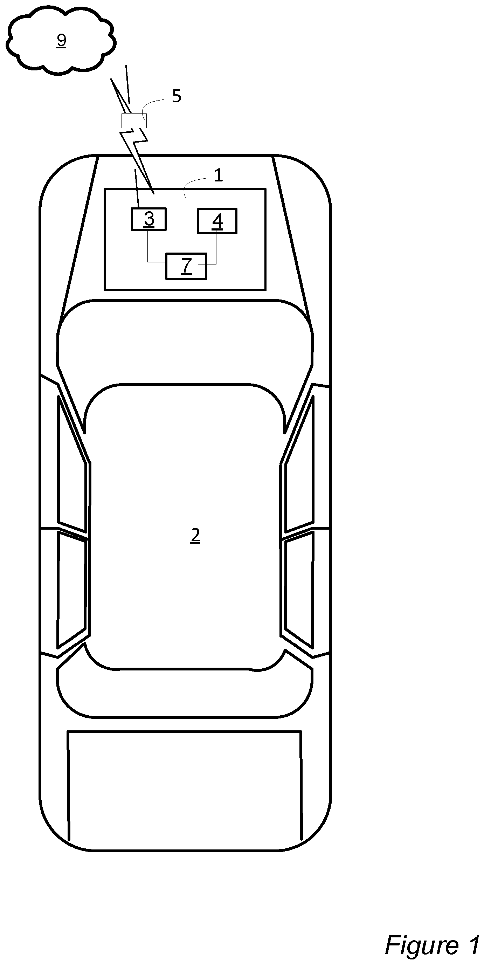

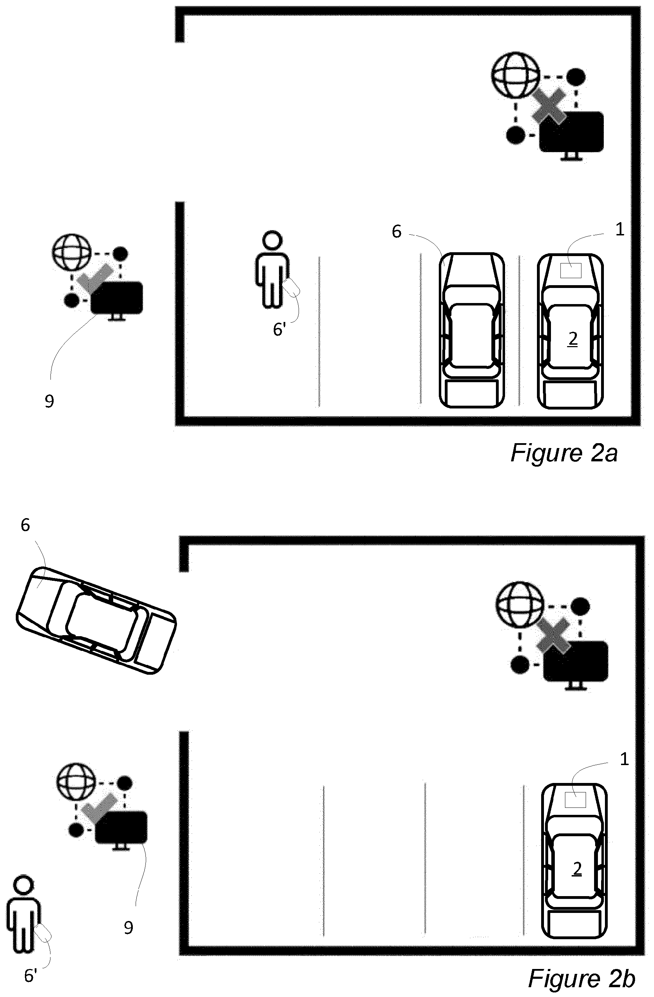

With reference to Figures 1, 2a and 2b the first aspect of this disclosure shows a communication system 1 for a vehicle 2 comprising a communication unit 3; a memory 4; and a processing circuitry 7 operatively connected to the communication unit 3 and the memory 4, arranged to cause the communication system to: receive a request that the vehicle 2 needs to send a data package 5; detect that no direct widearea network connection is available for sending the data package; search for surrounding devices 6, 6' capable of data communication with the vehicle 2; detect at least one surrounding device 6, 6' capable of data communication with the vehicle 2 and wherein the data communication is capable of receiving the data package 5; send a pairing request to the at least one surrounding device 6, 6'; detect by a reply that the at least one surrounding device 6, 6' is in wake-up mode; sending the data package 5 to the at least one surrounding device 6, 6' with instructions to relay the information to network server when a widearea network connection is available.

With reference to in Figures 2a and 2b the processing circuitry 7 is further arranged to cause the communication system to determine S6 that the at least one surrounding device 6, 6' is in wake-up mode by: detecting movement of the at least one surrounding device 6, 6'; or detecting that the at least one surrounding device 6, 6' communicates a wake-up status. The person holding the surrounding device 6' or the surrounding device 6 in the form of the other vehicle 6 could e.g. be detected by the vehicle 2 to be moving within the parking garage. The surrounding device 6' or the surrounding device 6 in the form of the other vehicle 6 could also have software installed to broadcast a wake-up status when waking up that is detected by the communication system 1.

The processing circuitry 7 is further arranged to cause the communication system to: establish a data connection with the at least one surrounding device and to cause the communication system to: receive information that the at least one surrounding device 6, 6' has a direct widearea network connection but has no connection to it at the moment. As seen in Figures 2a and 2b, two exemplary surrounding device are shown in the form of a vehicle 6 and a mobile phone 6' with an app.

The at least one surrounding device 6, 6', the vehicle 6 and the smartphone 6', are in Figures 2a and 2b trusted devices, e.g. a device or vehicle of the same brand as the vehicle or a device running a trusted software application.

The communication network 9 disclosed in Figure 1 as a cloud symbol and in Figures 2a and 2b as a network symbol is a wide area network connection with access to the network server. The data package 5, sent via the communication network 9 to a trusted device, is preferably encrypted as the information sent should be protected also from users of trusted devices. To further increase data security the surrounding devices of a first type are allowed to handle a first type of data packages and surrounding devices of a second type are allowed a second type of data.

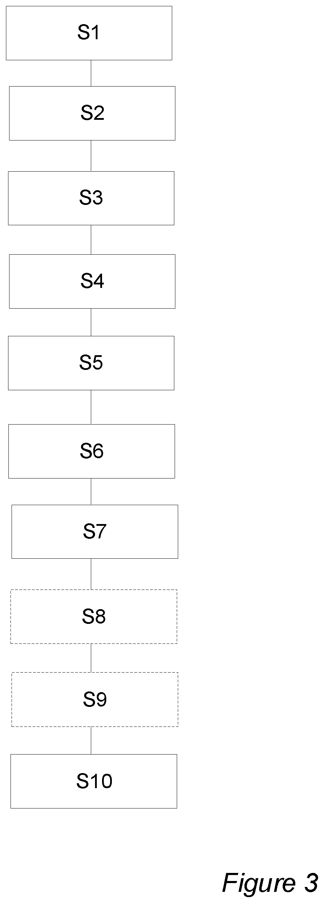

With reference to Figure 3, the second aspect of this disclosure shows a method for data communication when a vehicle has no direct widearea network connection, the method comprising: receiving S1 a request that the vehicle 2 needs to send a data package 5; detecting S2 that no direct widearea network connection is available for sending the data package; searching S3 for surrounding devices 6, 6' capable of data communication with the vehicle 2; detecting S4 at least one surrounding device 6, 6' capable of data communication with the vehicle 2 and wherein the data communication is capable of receiving the data package 5; sending S5 a pairing request to the at least one surrounding device 6, 6'; detecting S6, 6' byareply that the at least one surrounding device 6, 6' is in wake-up mode;; sending S10 the data package 5 to the at least one surrounding device 6, 6' with instructions to relay the information to network server when a widearea network connection is available.

In some embodiments the method step of detecting S7 that the at least one surrounding device 6, 6' is in wake-up mode further comprises determining S6 that the at least one surrounding device 6, 6' is in wake-up mode by: detecting movement of the at least one surrounding device 6, 6'; or detecting that the at least one surrounding device 6, 6' communicates a wake-up status.

The method comprises establishing S8 a data connection with the at least one surrounding device. The processing circuitry 7 further comprises receiving S9 information that the at least one surrounding device 6, 6' has a direct widearea network connection but has no connection to it at the moment.

The third aspect of this disclosure shows a vehicle comprising a communication unit 3; a memory 4; and a processing circuitry 7 operatively connected to the communication unit 3 and the memory 4, wherein the processing circuitry 7 is arranged to execute the method according to the second aspect. The vehicle can thereby send data packages also when not having a network connection for connecting to network servers part of the ecosystem of the vehicle's computer system.

The person skilled in the art realizes that the present disclosure is not limited to the preferred embodiments described above. The person skilled in the art further realizes that modifications and variations are possible within the scope of the appended claims. For example, the surrounding device could be any device having a suitable network connection and being able to relay the data package. The communication protocol between the communication system or vehicle and the surrounding device could be any suitable network communication method or standard suitable to communicate the data package. Additionally, variations to the disclosed embodiments can be understood and effected by the skilled person in practicing the claimed disclosure, from a study of the drawings, the disclosure, and the appended claims.

## Claims

1. A method for data communication when a vehicle has no direct (wide area) network connection, the method comprising:
receiving (S1) a request that the vehicle (2) needs to send a data package (5);
detecting (S2) that no direct (wide area) network connection is available for sending the data package;
searching (S3) for surrounding devices (6, 6') capable of data communication with the vehicle (2);
detecting (S4) at least one surrounding device (6, 6') capable of data communication with the vehicle (2) and wherein the data communication is capable of receiving the data package (5);
sending (S5) a pairing request to the at least one surrounding device (6, 6');
sending (S10) the data package (5) to the at least one surrounding device (6, 6') with instructions to relay the information to network server when a (wide area) network connection is available.

2. The method according to claim 1, further comprising
detecting (S7) (by a reply) that the at least one surrounding device (6, 6') is in wake-up mode.

3. The method according to claim 1 or claim 2, wherein detecting (S7) that the at least one surrounding device (6, 6') is in wake-up mode comprises
determining (S6) that the at least one surrounding device (6, 6') is in wake-up mode by:
detecting movement of the at least one surrounding device (6, 6'); or
detecting that the at least one surrounding device (6, 6') communicates a wake-up status.

4. The method according to claim 1 or claim 2, method further comprises establishing (S8) a data connection with the at least one surrounding device.

5. The method according to any one of the preceding claims, method further comprises
receiving (S9) information that the at least one surrounding device (6, 6') has a direct (wide area) network connection but has no connection to it at the moment.

6. The method according to any one of the preceding claims, wherein the at least one surrounding device is a vehicle.

7. The method according to any one of the preceding claims, wherein the at least one surrounding device is a mobile phone (with an app).

8. The method according to any one of the preceding claims, wherein the at least one surrounding device is trusted.

9. The method according to claim 8, wherein a trusted device is a device or vehicle of the same brand as the vehicle or a device running a trusted software application.

10. The method according to any one of the preceding claims, wherein the communication network is a wide area network connection with access to the network server.

11. The method according to any one of the preceding claims, wherein the data package is encrypted.

12. The method according to any one of the preceding claims, wherein the surrounding devices of a first type are allowed to handle a first type of data packages; and surrounding devices of a second type are allowed a second type of data.

13. A communication system (1) for a vehicle (2) comprising
a communication unit (3);
a memory (4); and
a processing circuitry (7) operatively connected to the communication unit (3) and the memory (4), arranged to cause the communication system to perform the method according to any one of the preceding claims.

14. A vehicle comprising
a communication unit (3);
a memory (4); and
a processing circuitry (7) operatively connected to the communication unit (3) and the memory (4),
wherein the processing circuitry (7) is arranged to execute the method according to any one of claims 1-12.
